(19) Europäisches Patentamt
European Patent Office
Office européen des brevets

(11) **EP 2 915 788 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
***C04B 26/02*** *(2006.01)* ***C08L 23/06*** *(2006.01)*
***C08K 7/22*** *(2006.01)*

(21) Anmeldenummer: **15157425.8**

(22) Anmeldetag: **03.03.2015**

(54) **Leichter Verbundwerkstoff**

Lightweight composite material

Matière première composite légère

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2014 DE 102014102841**

(43) Veröffentlichungstag der Anmeldung:
**09.09.2015 Patentblatt 2015/37**

(73) Patentinhaber: **Gebrüder Dorfner GmbH & Co. Kaolin- und Kristallquarzsand-Werke KG**
**92242 Hirschau (DE)**

(72) Erfinder: **Holtmann, Klaus**
**92224 Amberg (DE)**

(74) Vertreter: **Hannke, Christian**
**Hannke Bittner & Partner**
**Patent- und Rechtsanwälte mbB**
**Prüfeninger Straße 1**
**93049 Regensburg (DE)**

(56) Entgegenhaltungen:
**EP-A1- 2 366 725        DE-A1- 1 669 648**
**US-A1- 2006 217 464**

• **DATABASE WPI Week 200220 Thomson Scientific, London, GB; AN 2002-150642 XP002742070, & JP 2001 207066 A (MATSUSHITA ELECTRIC WORKS LTD) 31. Juli 2001 (2001-07-31)**

**Beschreibung**

Die vorliegende Erfindung betrifft einen Verbundwerkstoff, umfassend mindestens ein Bindemittel und mindestens eine Füllstofffraktion. Weiterhin betrifft die Erfindung ein Verfahren zur Herstellung eines derartigen Verbundwerkstoffes.

Aus dem Stand der Technik ist bereits eine große Anzahl verschiedener Verbundwerkstoffe bekannt. Diese bestehen in der Regel aus partikulären anorganischen Füllstoffen, wie Mineralien (z.B. Quarzsand), die in ein organisches Bindemittel (z.B. Polyester oder Acryl) eingebettet sind und so den Verbundwerkstoff bilden. Derartige Verbundmaterialien können beispielsweise bei Küchenspülen eingesetzt werden. Neben diesen Verbundwerkstoffen mit mineralischen Füllstoffen sind außerdem Verbundwerkstoffe bekannt, bei denen synthetische Füllstoffe (z.B. ATH) in organische Bindemittel eingebettet werden (z.B. bekannt als "Solid Surface Material"). Daneben ist auch bekannt, dass Mischungen aus unterschiedlichen Mineralien als Füllstoff in einem Verbundwerkstoff eingesetzt werden können (z.B. Deutsche Patentanmeldung Nr. 10 2012 113 000.0: "Verbundwerkstoff und Verfahren zu dessen Herstellung" derselben Anmelderin Gebrüder Dorfner GmbH & Co. Kaolin- und Kristallquarzsand-Werke KG).

Je nach verwendeten Füllstoffen und Bindemitteln können die Eigenschaften dieser Verbundwerkstoffe in einem gewissen Rahmen eingestellt werden. Außerdem kann über den Mengenanteil der Füllstoffe (Füllgrad) das Eigenschaftsprofil weiter moduliert werden. Die jeweiligen Verbundwerkstoffe der oben genannten Gruppen unterscheiden sich daher zum Teil deutlich voneinander. So ist es möglich, für verschiedene Anwendungsbereiche Verbundwerkstoffe mit einem akzeptablen Eigenschaftsprofil bereitzustellen.

Beispielsweise weisen Verbundwerkstoffe, die für Küchenspülen eingesetzt werden, üblicherweise einen Füllgrad von ca. 70 - 75 Gew.-% Füllstoff auf. Da für derartige Anwendungen als Füllstoffe üblicherweise gröbere Sandpartikel mit einem Partikeldurchmesser im Bereich von ca. 0,05 - 2 mm eingesetzt werden, weisen diese meist eine raue Oberfläche auf (Ra ca. 20 $\mu$m). Dies resultiert daraus, dass sich zwischen den vergleichsweise groben Sandpartikeln "Täler" aus Bindemittel befinden. Die über die Bindemittelschicht hervorstehenden Anteile der Sandpartikel sind vergleichsweise leicht zugänglich und in Verbindung mit der nur partiellen Haftung im Bindemittel daher leicht aus dem Verbundwerkstoff zu entfernen. Die Abriebbeständigkeit nach dem Taber Abrasor Test (DIN 14688 oder DIN 13310) liegt üblicherweise bei ca. 20 mg/100 Zyklen.

Die Weiterverarbeitung von Werkstücken aus einer derartigen Mischung ist sehr eingeschränkt: Sie sind üblicherweise nicht zur mechanischen Weiterverarbeitung vorgesehen. In der Regel werden sie nach der Fertigung lediglich mit Diamantwerkzeug nachbearbeitet. Ein nachträgliches Verkleben oder Schleifen der Oberfläche ist nur bedingt möglich und in der Regel nicht vorgesehen.

Im Gegensatz dazu ist eine Nachbearbeitung bei Solid Surface Werkstoffen möglich. Diese enthalten den Füllstoff ATH, der in der Regel in Anteilen zwischen 60 - 65 Gew.-% eingesetzt wird. Da ATH sehr weich ist (Härte nach Mohs ca. 2,5 - 3,5), kann ein solcher Verbundwerkstoff mit üblichen Stahlwerkzeugen nachbearbeitet werden. Durch die geringe Härte des Füllstoffes weisen diese Verbundwerkstoffe jedoch grundsätzlich auch eine geringe mechanische Stabilität gegenüber Abrieb (ca. 80 - 100 mg/100 Zyklen Taber Abrasor Test (DIN 14688 oder DIN 13310)) und eine geringe Kratzhärte von ca. 0,1 N (Eirichsen Kratzhärteprüfung (DIN 14688 oder DIN 13310)) auf. Für einige Anwendungen werden diese negativen Eigenschaften aber in Kauf genommen, da sie auch dazu führen, dass man diesen Verbundwerkstoff ähnlich einer MDF Platte schneiden, fräsen und schleifen kann. Insbesondere die Möglichkeit derartige Verbundwerkstoffe schleifen zu können, ermöglicht es, Bauteile aus Solid-Surface Platten zuschneiden und miteinander verkleben zu können. Zum Verbinden verschiedener Bauteile derartiger Verbundwerkstoffe wird zumeist dasselbe Bindemittel verwendet, das auch als Bindemittel im Verbundwerkstoff verwendet wurde. Dadurch kann ein homogener Bindemittelverbund erzeugt werden, so dass nach Abschleifen von Überständen die Klebefuge oft sogar nicht mehr zu erkennen ist. Da Solid-Surface-Materialien grundsätzlich nicht in Hochglanzoptik darzustellen sind, sind durch das Abschleifen einer Klebefuge oder durch sonstige Nachbearbeitungsprozesse entstehende Schleifspuren nicht zu erkennen.

Das Eigenschaftsprofil der oben bereits erwähnten Verbundmaterialen (z.B. gemäß der Deutschen Patentanmeldung Nr. 10 2012 113 000.0 derselben Anmelderin), bei dem Mischungen aus unterschiedlichen Mineralien als Füllstoff eingesetzt werden, liegt zwischen den beiden oben detaillierter beschriebenen Verbundwerkstoffen. Der Füllgrad liegt mit mehr als 75 Gew.-% deutlich über den anderen beiden Verbundwerkstoffklassen. Der Abrieb nach Taber liegt üblicherweise zwischen 25 und 31 mg/100 Zyklen und die Kratzhärte nach Eirichsen (DIN 14688 oder DIN 13310) über 1,5 - 2 N. Trotz dieser Eigenschaften lässt sich das Material problemlos mit Werkzeugen aus Hartmetall oder gehärtetem Stahl zuschneiden. Auch ein Verkleben mit einer Mischung unausgehärtetem Verbundmaterials oder einem speziell farblich abgestimmten Klebstoff ist mit diesem Material möglich.

Neben den genannten Unterschieden der verschiedenen Verbundwerkstoffe unterscheiden sich diese auch im Hinblick auf Ihre jeweilige spezifische Dichte und die Bruchzähigkeit.

Die Dichte des Verbundwerkstoffs wird maßgeblich einerseits von der Dichte der eingesetzten Füllstoffe (z.B. ATH 2,45 g/cm$^3$, Quarz 2,5 g/cm$^3$, Dolomit 2,9 g/cm$^3$) und andererseits von deren Füllgrad im Verbundwerkstoff bestimmt. Die üblicherweise verwendeten Bindemittel haben mit ca. 1,1 g/cm$^3$ eine deutlich niedrigere Dichte als die Füllstoffe.

Für die in den ausgehärteten Verbundwerkstoffen vorliegende Mischung aus (ausgehärtetem) Bindemittel (bzw. Harz oder Polymer) und Füllstoff(en) ergeben sich daher in etwa folgende Werte für die spezifische Dichte: Solid Surface mit ATH (ca. 60 Gew-% Füllgrad): 1,75 g/cm$^3$, Spülenmaterial mit Quarzsand als Füllstoff (Füllgrad 70 - 75 Gew-%): 1,9 - 2 g/cm$^3$ und ein Verbundmaterial mit Mischungen aus unterschiedlichen mineralischen Füllstoffen (z.B. nach deutscher Patentanmeldung DE 10 2012 113 000.0) (Füllgrad > 75 Gew-%): 2 - 2,2 g/cm$^3$.

Ein ähnlicher Zusammenhang besteht auch hinsichtlich der Bruch- und Schlagzähigkeit der verschiedenen Verbundwerkstoffe. Hier besteht weitgehend der Zusammenhang, dass ein geringerer Füllgrad zu einer höheren Bruch- und Schlagzähigkeit führt. Dies kann mit dem sinkenden E-Modul des Verbundwerkstoffs und der höheren "Zähigkeit" des Bindemittels gegenüber dem Füllstoff erklärt werden. Bei Solid-Surface-Materialien mit ATH liegt die Schlagzähigkeit bei ca. 6,5 kJ/m$^2$, bei Küchenspülenmischungen (mit Quarzsand als Füllstoff) bei ca. 2 kJ/m$^2$ und bei einem Verbundmaterial mit Mischungen aus unterschiedlichen mineralischen Füllstoffen (z.B. gemäß deutscher Patentanmeldung DE 10 2012 113 000.0) wahrscheinlich ebenfalls im Bereich von ca. 2 kJ/m$^2$.

Aus dem Stand der Technik sind demnach keine Verbundwerkstoffe bekannt, die sowohl eine hohe Verschleißfestigkeit (insbesondere in Bezug auf Abrieb und Verkratzen) als auch eine geringe Dichte und hohe Schlagzähigkeit aufweisen. Insbesondere werden diese Eigenschaften von den aus dem Stand der Technik bekannten Verbundwerkstoffen nicht gewährleistet, wenn der Verbundwerkstoff nach der Herstellung schleifbar und verklebbar sein soll.

In der Vergangenheit wurde bereits versucht, die Dichte eines Verbundwerkstoffs dadurch zu reduzieren, dass Leichtfüllstoffe eingesetzt wurden. Bekannt ist z.B. der Einsatz von Glashohlkugeln (Schüttdichte ca. 0,1 - 0,2 g/cm$^3$) oder expandiertem Perlit. Derartige Hohlkugeln haben nicht nur den Vorteil eines geringen Schüttgewichts, sondern sie verbessern durch ihre Kugelform auch die Fließfähigkeit eines Füllstoffes im Bindemittel.

Dennoch weisen sie gravierende Nachteile auf: So können die dünnwandigen Hohlkugeln beim Mischen mit harten Mineralien, wie z.B. Sand, zerbrechen, wodurch sowohl der positive Effekt der geringen Dichte der Hohlkörper als auch ihrer Kugelform verloren geht. Besonders nachteilig sind Füllmaterialien aus Hohlkugeln unabhängig von deren Material jedoch bei einem möglichen An- oder Abschleifen des Verbundwerkstoffs nach dem Aushärten. Beim Schleifen wird zumindest von einem Teil der Füllstoffpartikel ein Teil der Kugelhülle zerstört, wodurch ein von außen zugänglicher Hohlraum entsteht. In diesen Hohlraum kann Schmutz und/oder Feuchtigkeit eindringen. insbesondere partikulärer Schmutz ist aus diesen Hohlkörpern gar nicht oder nur äußerst schwierig zu entfernen. Analog dem Chemikalientest nach DIN 14688 oder DIN 13310 ist Methylenblau nach dem Schleifen eines Verbundmaterials mit Hohlkugeln oder treibmittelgefüllten Hohlkugeln (z.B. gemäß DE 19812123 A1) in Form von dunklen Punkten in der Oberfläche zu erkennen. Derartige Füllstoffe sind demnach zwar prinzipiell einsetzbar, erlauben jedoch keine nachträgliche Bearbeitung.

Bei der Verwendung von Glaskugeln ergeben sich zusätzliche Nachteile. Glashohlkugeln bestehen üblicherweise entweder aus Kalknatronglas (Hydrolyseklasse C) oder Aluminosilikatglas (e-Glas) mit einer Beschichtung (Hydrolyseklasse B). Beide Glasarten können bei dauerhaftem Feuchtigkeitsangriff z.B. während des Heiß-Kalt-Zyklus (HKZ, z.B. gemäß DIN 14688 oder DIN 13310) chemisch angegriffen werden, so dass der Verbund zwischen Bindemittel und Glas aufgelöst wird. Dies kann zu sogenanntem Blushing (Farbänderung) oder sogar Rissen im Verbundmaterial führen.

Auch bei der Produktion derartiger Verbundwerkstoffe treten zusätzliche Probleme auf, da Hohlkugeln aufgrund ihrer geringen Dichte gemäß dem Stokes Gesetz im Verbundwerkstoff auftreiben und so auch zu Entmischungen im flüssigen Verbundmaterial führen können. Durch den so entstehenden Füllstoffkonzentrationsgradienten im Verbundwerkstoff ist das Verbundmaterial nicht mehr isotrop und kann sich bei Temperaturschwankungen je nach lokaler Füllstoffkonzentration unterschiedlich verhalten. Insbesondere aufgrund der Tatsache, dass die Hohlkugeln Wärme besonders schlecht leiten, sind starke Temperatur- und Spannungsgradienten über die Dicke des Verbundwerkstoffs äußerst wahrscheinlich.

Mineralische Hohlkugeln haben zudem den weiteren Nachteil, dass deren E-Modul genauso hoch ist wie der anderen Füllmaterialien und so keine Verbesserung der Schlagzähigkeit zu erwarten ist.

Um die Schlagzähigkeit zu verbessern, wird daher in DE 10 2009 025 225 A1 die Möglichkeit des Zusatzes von Fasern offenbart. Dabei können die Fasern dazu dienen, zwei Rissufer zu überbrücken. Öffnet sich der Riss weiter, wird die Faser im Idealfall aus der Matrix gezogen (Slip, Pull out)), was dazu führten kann, dass die dafür notwendige Kraft zur Überwindung der Reibung (Wärme) dem Riss nicht mehr aus der elastisch gespeicherten Energie im Material zur Schaffung neuer Rissoberflächen zur Verfügung steht, wodurch sich die Rissausbreitung verlangsamt und sich die Schlag- oder Bruchzähigkeit verbessert.

Weiterhin sind verschiedene Verbundwerkstoffe bzw. Verbundmaterialien in US 2006 217 464 A1, JP 2001 204 066 A, DE 16 69 648 A1 und EP 2 366 725 A1 offenbart.

Es ist daher Aufgabe der vorliegenden Erfindung, einen Verbundwerkstoff bereitzustellen, der sowohl eine hohe Verschleißfestigkeit (insbesondere in Bezug auf Abrieb und Verkratzen) und hohe Schlagzähigkeit als auch eine geringe Dichte und verringertes Bruchrisiko aufweist und darüber hinaus bevorzugt auch nach der Herstellung schleifbar und verklebbar ist.

Diese Aufgabe wird durch einen Verbundwerkstoff, umfassend mindestens ein Bindemittel und mindestens eine Füllstofffraktion, gelöst, wobei der Verbundwerkstoff eine Dichte von unter 2 g/cm$^3$ aufweist und mindestens eine erste Füllstofffraktion partikuläre polymere Füllstoffe aufweist. Ein solcher Verbundwerkstoff weist eine hohe Verschleißfestigkeit und eine hohe Schlagzähigkeit bei verringertem Bruchrisiko auf.

Vorzugsweise ist der Verbundwerkstoff mit partikulären polymeren Füllstoffen sowohl schleifbar als auch klebbar. Im Vergleich zu den Solid-Surface-Materialien zeigt der Verbundwerkstoff aber dennoch einen geringeren Abrieb und auch eine höhere Kratzhärte.

Dabei werden als Füllstoffe bevorzugt Materialien verwendet, die eine geringere spezifische Dichte als die aus dem oben genannten Stand der Technik bekannten mineralischen Füllstoffe aufweisen. Diese Füllstoffe können alternativ zu mineralischen oder synthetischen Füllstoffen oder in Mischungen mit mineralischen und/oder synthetischen Füllstoffen oder als einziger Füllstoff eingesetzt werden. Erfindungsgemäß umfasst der Verbundwerkstoff somit zumindest zwei Füllstofffraktionen, wobei eine zweite Füllstofffraktion mineralische Füllstoffe aufweist, wobei die erste Füllstofffraktion mit partikulären polymeren Füllstoffen eine spezifische Dichte von < 2 g/cm$^3$ aufweist und somit eine geringere spezifische Dichte als die Füllstoffe der zweiten Füllstofffraktion aufweist. Vorzugsweise weist die erste Füllstofffraktion mit partikulären polymeren Füllstoffen eine spezifische Dichte von < 1,5 g/cm$^3$, besonders bevorzugt < 1 g/cm$^3$ auf.

Erfindungsgemäß umfasst der Verbundwerkstoff 0,05 - 40 % (Gew.-%) Füllstoffe der ersten Füllstofffraktion. In einer bevorzugten Ausführungsform umfasst der Verbundwerkstoff 0,075 - 20 % (Gew.-%), besonders bevorzugt 0,1 - 5 % (Gew.-%) Füllstoffe der ersten Füllstofffraktion.

Erfindungsgemäß ist der Elastizitätsmodul der ersten Füllstofffraktion geringer als der Elastizitätsmodul des Bindemittels. Vorzugsweise ist der Elastizitätsmodul der ersten Füllstofffraktion geringer als der Elastizitätsmodul der zweiten Füllstofffraktion, wobei der Elastizitätsmodul der ersten Füllstofffraktion bevorzugt < 1,5 GPa besonders bevorzugt < 1 GPa ist. Demzufolge weist ein solcher Füllstoff auch einen geringeren Elastizitätsmodul als die aus dem oben genannten Stand der Technik bekannten Füllstoffe auf. Wie später noch beschrieben, folgt durch einen derartigen geringen Elastizitätsmodul der ersten Füllstofffraktion eine hohe Schlagzähigkeit des Verbundmaterials.

Die Füllstoffe der ersten Füllstofffraktion weisen erfindungsgemäß eine mittlere Korngröße in einem Bereich von 1 - 300 μm, besonders bevorzugt in einem Bereich von 20 - 130 μm auf. Die Füllstoffe zeigen somit eine Korngröße auf, die gleich oder geringer der Korngröße der aus dem oben genannten Stand der Technik bekannten mineralischen Füllstoffe ist. Ferner weisen die Füllstoffe der ersten Füllstofffraktion vorzugsweise eine Schüttdichte von 0,2 - 0,4 g/cm$^3$, besonders bevorzugt 0,2 bis 0,3 g/cm$^3$ auf. Demnach ist die Schüttdichte derartiger Füllstoffe geringer als die aus dem oben genannten Stand der Technik bekannten mineralischen Füllstoffe oder Füllstoffmischungen.

Bevorzugt weisen die Partikel der ersten Füllstofffraktion eine ellipsoide oder runde Form auf wodurch die rheologischen Eigenschaften, wie etwa Verformungs- und Fließverhalten des Verbundwerkstoffes verbessert sind. Erfindungsgemäß weisen die Partikel der ersten Füllstofffraktion eine offene und/oder schwammartige und/oder poröse Struktur und/oder eine Rauigkeit oder sonstige Kornform, die eine formschlüssige Verbindung zwischen Bindemittel und dem Korn ermöglicht, auf. Durch eine derartige Struktur ist eine dauerhafte Bindung zwischen den Partikeln der ersten Füllstofffraktion und dem Bindemittel beruhend auf Formschluss ausgebildet, wobei die erste Füllstofffraktion ganz oder teilweise von dem Bindemittel durchdrungen ist. Dies wird später noch detaillierter beschrieben. Es hat sich gezeigt, dass trotz der Offenporigkeit und/oder der Rauigkeit oder sonstigen Kornform, die eine formschlüssige Verbindung zwischen Bindemittel und dem Korn ermöglicht, der Partikel der ersten Füllstofffraktion die Verbundwerkstoffe keine Verschlechterung der rheologischen Eigenschaften zeigen. Ferner ist bei Verwendung derartiger Füllstoffe der Bindemittelverbrauch nicht erhöht. Verbundwerkstoffe mit solchen Füllstoffen sind derart ausgebildet, dass die Poren zumindest teilweise mit Bindemittel gefüllt werden und/oder eine solche Geometrie und/oder eine Rauigkeit oder sonstige Kornform, die eine formschlüssige Verbindung zwischen Bindemittel und dem Korn ermöglicht, aufweisen, dass es nach dem Aushärten des Verbundwerkstoffs auch beim Anschleifen des Materials nicht zu einer erhöhten Verschmutzung kommt.

Vorzugsweise ist der Füllstoff der ersten Füllstofffraktion transluzent. Transluzente (lichtdurchlässige) Füllstoffe sind insbesondere gegenüber transparenten (Bild- oder Blickdurchlässig) Füllstoffen von Vorteil, da sie keine Streulichteffekte zeigen und demnach farbneutral im Bindemittel sind. Dementsprechend sind derartige Füllstoffe für einige Anwendungen, bei denen eine hochweiße Farbe der Verbundwerkstoffe erwünscht ist (z.B. im Sanitärbereich), besonders geeignet.

Weiter bevorzugt sind die Füllstoffe der ersten Füllstofffraktion chemisch inert, bevorzugt zumindest gegenüber den während der Herstellung, der Verarbeitung und/oder der Anwendung mit diesen in Kontakt kommenden Chemikalien chemisch inert.

Erfindungsgemäß ist der Füllstoff der ersten Füllstofffraktion Polyethylen (PE), insbesondere HD Polyethylen (HDPE, high density Polyethylen). Vorzugsweise sind zusätzlich zu Polyethylen beziehungsweise HD Polyethylen Elastomere, PVC, Silikon, Polypropylen oder Teflon weitere mögliche Füllstoffe. PE / HDPE kann großtechnisch hergestellt werden und ist in großen Mengen vergleichsweise günstig verfügbar. Weitere Vorzüge einer Verwendung von PE / HDPE werden im Weiteren noch dargestellt.

Vorteilhafterweise wird durch die formschlüssige Verbindung zwischen den Partikeln der ersten Füllstofffraktion und dem Bindemittel eine verformbare Verbindung zwischen Partikeln der zweiten Füllstofffraktion gebildet, wodurch der Elastizitätsmodul des Verbundwerkstoffs verringert ist. Durch die verformbarere Verbindung zwischen den Füllstoffpartikeln der zweiten Füllstofffraktion, die ein vorteilhafter Einsatz eines weichen porösen Füllstoffs der ersten Füllstofffraktion ermöglicht, sinkt insgesamt der E-Modul des Verbundwerkstoffs. Dies bedeutet, dass bei gleicher Dehnung oder (sonstiger z.B. mechanischer) Belastung weniger elastische Verformungsenergie in dem Verbundwerkstoff gespeichert werden kann. Weniger elastisch gespeicherte Energie bedeutet, dass bei gleicher Verformung (bzw. mechanischer Belastung) weniger Energie zur Rissausbreitung verfügbar ist. Die Möglichkeit, mehr Energie in Form von elastischer Verformung im Inneren des Verbundwerkstoffes speichern zu können bedeutet, dass ein Bauteil, welches mit dem bevorzugten Verbundwerkstoff hegestellt ist, eine höhere Bruchzähigkeit aufweist. Diese vorteilhafte Eigenschaft lässt sich prinzipiell für alle Mischungen zur Herstellung von Verbundwerkstoffen (z.B. Sanitärmischungen, Schleifbare Sanitärmischungen, Spülenmischungen usw.) ausnutzen. Analog wird durch derartige vorteilhafte Verbundwerkstoffe auch das Abplatzverhalten bei Stoß mit einem spitzen Körper deutlich verbessert. Abplatzungen (Lateralrisse) entstehen bei der Entlastung des Materials nach dem Eindringen des Stoßkörpers. Verantwortlich dafür ist die elastisch gespeicherte Energie unter dem Einschlagpunkt (isostatisch komprimiertes Material). Es gilt: Je geringer der E-Modul des Materials, desto geringer die Lateralrissbildung und damit der Materialabtrag. Ein Beispiel, bei dem dieser Effekt ausgenutzt wird, sind Gummipanzerungen von Mühlen. Üblicherweise geht das geringere Abplatzverhalten jedoch mit geringerer Widerstandsfähigkeit gegen Verkratzen und Abrieb einher. Dies ist aber jedoch bei hier vorgeschlagenen Füllstoffen und den daraus hergestellten Verbundwerkstoffen nicht der Fall.

Die ebenfalls überraschend guten rheologischen Eigenschaften von derartigen vorteilhaften Mischungen sind anders als bei üblichen Beimengungen aus z.B. Glaskugeln oder Glashohlkugeln nicht durch die perfekte Kugelform des Korns zu erklären, sondern durch die Tatsache, dass der Füllstoff der ersten Füllstofffraktion einen geringen Elastizitätsmodul aufweist und somit verformbar ist.

Vorteilhafterweise weist der Verbundwerkstoff eine Abriebbeständigkeit nach Taber Abrasortest < 50 mg/ 100 Zyklen, bevorzugt < 40 mg/ 100 Zyklen, besonders bevorzugt < 35 mg/ 100 Zyklen und/oder eine Kratzhärte (Eirichsen) in einem Bereich > 0,1 N, bevorzugt 1N - 4N und/oder eine Schlagzähigkeit von > 1 KJ/m$^2$, bevorzugt >2 KJ/m$^2$ auf. Der vorteilhafte Verbundwerkstoff zeigt somit eine hohe Verschleißfestigkeit. Trotz der hohen Widerstandsfähigkeit gegen Verkratzen und Abrieb weist der Verbundwerkstoff weiterhin eine hohe Schlagzähigkeit auf.

Die Aufgabe wird weiterhin durch ein Verfahren zum Herstellen eines Verbundwerkstoffs gelöst, welches sich dadurch auszeichnet, dass mindestens ein Bindemittel mit mindestens einer partikulären polymeren Füllstofffraktion vermischt wird, wobei der Verbundwerkstoff eine Dichte von unter 2 g/cm$^3$ aufweist.

Ein weiterer Aspekt der Erfindung ist ein Bauteil, welches einen wie oben beschriebenen Verbundwerkstoff umfasst.

Von besonderem Interesse bei einem derartigen vorteilhaften Bauteil ist die Bruchwahrscheinlichkeit eines Bauteils. Entscheidend für die Bewertung der Bruchwahrscheinlichkeit ist der längste Riss unter Zugspannung. Ein Maß für die Wahrscheinlichkeit des Versagens eines sprödelastischen Werksstoffs (z.B. Keramik) unter einer bestimmten Last ist der Weibullmodulus. Je höher dieser Weibullmodulus ist, desto geringer ist die Wahrscheinlichkeit, dass ein sprödelastisches Bauteil unter der vorhergesehenen Belastung bricht. Unter Verwendung der hier beschriebenen Verbundwerkstoffe kann ein Bauteil daher bei vorgegebener Belastungsgrenze dünnere Wandstärken aufweisen und benötigt weniger Materialreserven. Vorteilhafterweise weist das Bauteil einen Weibullmodulus (m) von 11 - 20 (bei einem Füllgrad von 73 Gew.-%), bevorzugt 14 auf. Dieser Wert liegt deutlich über dem einer Ingenieurkeramik, wodurch verdeutlicht wird, dass durch einen solchen Verbundwerkstoff insbesondere gegenüber Sanitärkeramik deutlich geringere Wandstärken und geringeres Gewicht bei gleicher Festigkeit ermöglicht werden.

Weiter ist bevorzugt, dass das Bauteil ein Produkt zur Verwendung im Sanitärbereich ist. Beispielhafte Sanitärprodukte sind Badewannen, Duschtassen, Küchenspülen, Kacheln, Fliesen oder ähnliche Bauelemente. Ein weiterer vorteilhafter Aspekt, der sich aus der geringeren Dichte eines vorteilhaften Verbundwerkstoffs ergibt, ist die Reduzierung der Belastungen des Bauteils, die zum Bruch führen. Lasten führen zu Durchbiegungen und damit auf der konvexen Oberfläche zu Zugspannungen, die Risse auslösen. Ein vorteilhaftes Bauteil weist bei vorgegebener Masse und Dimensionierung eine reduzierte Bruchwahrscheinlichkeit auf, da durch die reduzierte Dichte die Dicke des Bauteils bei gleichbleibender Masse und Dimensionierung erhöht werden kann.

Im Folgenden wird unter Bezugnahme auf die nachfolgenden Zeichnungen die Erfindung näher erläutert. Es zeigen:

Fig. 1        eine Morphologie von PE-Granulat mit hoher Schüttdichte;

Fig. 2        eine Morphologie von PE-Granulat mit niedriger Schüttdichte;

Fig. 3        eine schematische Darstellung eines Querschnitts durch einen in Bindemittel eingebetteten Füllstoffpartikel;

Fig. 4a, 4b    schematisch das Verhalten eines aus dem Stand der Technik bekannten Verbundmaterials mit mineralischen Füllstoffen bei mechanischer Belastung;

Fig. 5a, 5b    schematisch das Verhalten eines Verbundmaterials mit mineralischen Füllstoffen und zusätzlichen porösen Füllstoffen bei mechanischer Belastung;

Fig. 6    schematisch ein mögliches Verhalten, wenn weder eine chemische noch eine formschlüssige Bindung zwischen Füllstoff und Bindemittel vorliegt.

Ein Verbundwerkstoff, der sowohl eine hohe Verschleißfestigkeit (insbesondere in Bezug auf Abrieb und Verkratzen) und eine hohe Schlagzähigkeit, als auch eine geringe Dichte und ein verringertes Bruchrisiko aufweist und darüber hinaus bevorzugt auch nach der Herstellung schleifbar und verklebbar ist, umfasst mindestens ein Bindemittel und mindestens eine Füllstofffraktion, wobei der Verbundwerkstoff eine Dichte von unter 2 g/cm$^3$ aufweist und mindestens eine erste Füllstofffraktion partikuläre polymere Füllstoffe aufweist.

Derartige Füllstoffe mit den eingangs angeführten Eigenschaften können im Bereich der Kunststoffe beziehungsweise Polymere (siehe beispielsweise Tabelle 2) gefunden werden. Dabei hat sich Polyethylen (PE) und insbesondere HD Polyethylen (HDPE, high density Polyethylen) als besonders geeignet erwiesen. Beispielhafte Eigenschaften eines HD Polyethylens sind in Tabelle 1 exemplarisch dargestellt.

Tabelle 1: Beispielhaftes Eigenschaftsprofil eines Polyethylens hoher Dichte (HD-PE)

| Eigenschaften | Messmethode | Wert | Maßeinheit |
|---|---|---|---|
|  |  |  |  |
| Dichte | ISO 1183 | 0,963 | g/cm$^3$ |
|  |  |  |  |
| **Mechanische Eigenschaften** |  |  |  |
| Streckspannung | ISO 527 | 30 | MPa |
| Reißdehnung | ISO 527 | >400 | % |
| E-Modul | ISO 527 | 700-1300 | MPa |
| Kugeldruckhärte | ISO 2039-1 H132/30 | 57 | MPa |
| Härte Shore (A/D) oder Rockwell (R/L/M) | ISO 868 oder ISO 2039-2 | D64 | - |
|  |  |  |  |
| **Thermische Eigenschaften** |  |  |  |
| Wärmeleitfähigkeit | DIN 52 612 | 0,42 | W/K m |
| Längenausdehnung längs\|quer zur Fließrichtung | ISO 11359 | 120-150 | 10-6/K |
| Schmelz- bzw. Glasübergangstemperatur | ISO 11357 | 135 | °C |
| Wärmeformbeständigkeit A | ISO 75 HDT/A (1.8 MPa) | 49 | °C |
| Wärmeformbeständigkeit B | ISO 75 HDT/B (0,45 MPa) | 86 | °C |
| max. Temperatur kurzzeitig |  | 100 | °C |
| max. Temperatur dauernd |  | 90 | °C |
| min. Anwendungstemperatur |  | -80 | °C |
|  |  |  |  |
| **Sonstige Eigenschaften** |  |  |  |
| Wasseraufnahme bei Normalklima | ISO 62 | <0,1 | % |
| Wasseraufnahme bei Wasserlagerung | ISO 62 | <0,1 | % |
| Transparenz (opak/transluzent/klarsichtig) |  | transluzent |  |

Alternativ oder zusätzlich zu Polyethylen beziehungsweise HD Polyethylen sind Elastomere, PVC, Silikon, Polypropylen oder Teflon weitere mögliche Füllstoffe.

Vorzugsweise ist der Elastizitätsmodul der ersten Füllstofffraktion geringer als der Elastizitätsmodul des Bindemittels und/oder geringer als der Elastizitätsmodul der zweiten Füllstofffraktion. Dadurch ist, wie später noch detailliert beschrieben, eine hohe Schlagzähigkeit gegeben. In Tabelle 2 sind exemplarisch der Elastizitätsmodul (auch E- Modul genannt) einiger ausgewählter Bindemittel, wie sie üblicherweise in mineralischen Verbundwerkstoffen (Kompositmaterialien) eingesetzt werden, einschließlich HD Polyethylen gezeigt.

Tabelle 2: Elastizitätsmodul (E- Modul) einiger ausgewählter Bindemittel (einschließlich Polyethylen)

| Polymer | E-Modul [GPa] (1 GPa = $10^9$ N/m$^2$) |
|---|---|
| Alkyde | 20 |
| Melamine | 6 - 7 |
| Polyimide | 3 - 5 |
| Polyester | 1 - 5 |
| Acrylate (z.B. "Plexiglas") | 1,5 - 3 |
| Nylon | 2 - 4 |
| Epoxy | 3 |
| Polyethylen | 0,7 |
| Polyurethanschaum | 0,01 - 0,06 |
| Elastomere ("Gummi") | 0,01 - 0,1 |
| PVC | 0,003 - 0,01 |
| Polymerschaum (z.B. "Styropor") | 0,001 - 0,01 |

Es ist ersichtlich, dass Acrylate und Polyester, die üblicherweise als Bindemittel verwendet werden, einen höheren E-Modul als Polyethylen oder HD Polyethylen aufweisen.

Die Eignung von PE und HDPE als Füllstoff ist unerwartet, da dieses Material keinerlei chemische Bindung mit dem Bindemittel eingeht, wie üblicherweise gefordert wird. Die nicht vorhandene oder äußerst schwache Bindung zwischen PE und Bindemittel wird beispielsweise bei kleineren Abgüssen (im Labormaßstab) genutzt, da sich ein Kompositmaterial (Verbundmaterial) ohne weiteres aus Formen aus PE und HDPE entnehmen lässt, auch wenn die Formen vorab nicht mit Trennmittel behandelt wurden. Demgegenüber bestehen Gussformen für mineralische Verbundwerkstoffe meist aus GFK, das innen mit Polyester/Epoxilack (als Versiegelung und/oder Trennmittel) beschichtet ist, da - sollten diese Gussformen vor dem Gießen nicht versiegelt und mit Trennmittel beschichtet werden - das Bindemittel teilweise so stark an der Gussform haftet, dass das Werkstück nicht mehr aus der Form entfernt werden kann.

Die Eignung von PE und HDPE als Füllstoff ist darüber hinaus unerwartet, da eine dauerhafte Verbindung zwischen dem Füllstoff und dem Bindemittel erforderlich ist, um eine Ablösung des Bindemittels vom Füllstoffkorn zu vermeiden. Dies ist insbesondere nach DIN 14688 oder DIN 13310 im Heißkaltzyklus von Bedeutung. Ohne Haftung des Bindemittels auf dem Füllstoffkorn kommt es bei den auftretenden thermischen Spannungen zu einer Ablösung des Bindemittels vom Korn. Dies führt einerseits zu einer optischen Aufhellung des Materials durch Streulicht, welche als Blushing bezeichnet wird, und andererseits können aus diesen kleinen Ablösungen große, deutlich sichtbare Risse im Verbundwerkstoff entstehen, die dessen mechanische Integrität zerstören.

Überraschenderweise hat sich entgegen dieser theoretischen Annahmen jedoch gezeigt, dass diese Nachteile trotz der fehlenden chemischen Bindung zwischen PE und dem Bindemittel bei einem Verbundwerkstoff mit Granulat aus PE/HDPE als Füllstoff nicht der Fall sind.

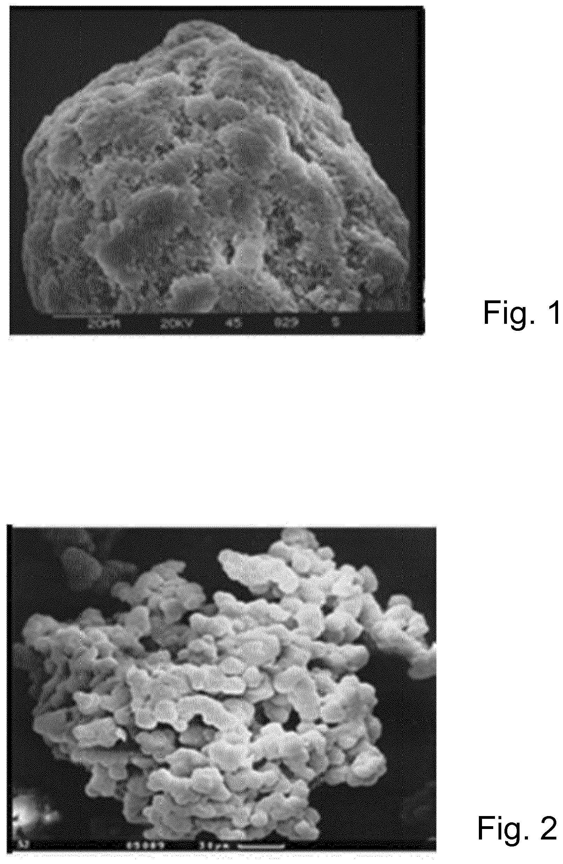

Eine mögliche Erklärung dafür kann in der Morphologie der eingesetzten PE- und/oder HDPE-Granulate gesehen werden. Die in einem Beispiel verwendeten Granulate weisen einen Korngrößenbereich von etwa 1 - 300 μm auf. In einem speziellen Fall wurde eine Mischung von Granulaten mit einer mittleren Korngröße (d50) von 20, 50, und 125 μm verwendet. Bei einer Dichte des HDPE von ca. 0,94 - 0,98 g/cm$^3$ wiesen verschiedene beispielhafte Muster von Granulaten und/oder Granulatmischungen Schüttdichten von 0,2 - 0,4 g/cm$^3$ auf. Dieser Unterschied in den Schüttdichten bei nahezu gleicher spezifischer Dichte ergibt sich aus der Feinstruktur der Partikel. Pulver mit einer Schüttdichte > 0,3 g/cm$^3$m bestehen weitgehend aus Partikeln, beispielsweise Körnern, welche kompakt sind und eine weitestgehend geschlossene Oberfläche aufweisen. Ein Beispiel für eine solche Morphologie ist in Fig. 1 gezeigt. Demgegenüber weisen die Partikel mit einer Schüttdichte < 0,3 g/cm³m weitgehend eine offene schwammartige Struktur auf. Ein Beispiel für eine solche Morphologie ist in Fig. 2 gezeigt. Derartige Partikel setzen sich bevorzugt aus einer Vielzahl kleinerer Partikel (Sub-Partikel, Teilpartikel) zusammen.

Füllstoffe mit einer solchen offenen Struktur und/oder mit einer Rauigkeit oder sonstigen Kornform, die eine formschlüssige Verbindung zwischen Bindemittel und dem Korn ermöglicht, sind als Füllstoffe für Verbundmaterialien gemäß der vorliegenden Erfindung besonders bevorzugt. Die weitgehend offene, schwammartige Struktur und/oder die Rauigkeit oder sonstige Kornform, die eine formschlüssige Verbindung zwischen Bindemittel und dem Korn ermöglicht, des Füllstoffs ermöglicht es, dass Bindemittel in die Poren eindringt, dort aushärtet und den Partikel - auch wenn, wie oben beschrieben, keine chemische oder lediglich eine schwache Bindung ausgebildet wird - durch Formschluss fixiert. Die Porosität und die weitgehend offene, schwammartige Struktur der PE- (und/oder HDPE-) Partikel hat somit nicht nur den Vorteil einer geringen Schüttdichte, sondern liefert zusätzlich auch mechanische Vorteile.

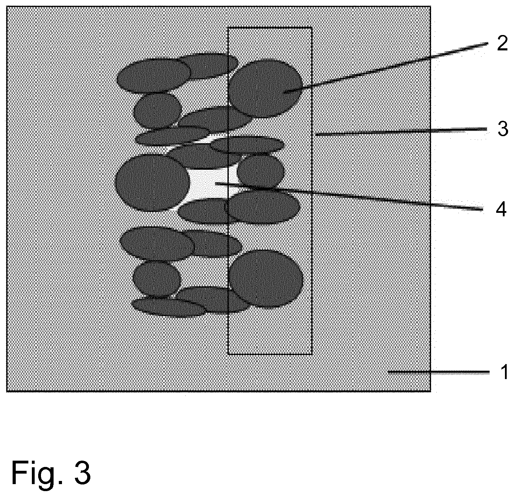

In Figur 3 ist eine beispielhafte schematische Darstellung eines Querschnitts von in Bindemittel 1 eingebetteten offenporigen Füllstoffpartikeln bzw. Körnern 2 gezeigt. Wie oben bereits erwähnt, kann bei PE/HDPE anders als bei dichten Materialien mit geschlossener Oberfläche eine dauerhafte Bindung zwischen Partikel 2 und Bindemittel 1 beruhend auf Formschluss ausgebildet werden. Dabei dringt das flüssige Bindemittel 1 in die Poren und/oder die Rauigkeit oder sonstige Kornform, die eine formschlüssige Verbindung zwischen Bindemittel und dem Korn ermöglicht, des Partikels 2 ein und härtet dort aus. Dieses Eindringen kann je nach Größe des Partikels 2 und Viskosität und Oberflächenspannung des Bindemittels 1 nur in der Hülle des Partikels 2 erfolgen oder aber den Partikel 2 vollständig durchdringen. Es ergeben sich somit sowohl Bereiche 3, welche von dem Bindemittel durchdrungen sind, als auch Bereiche 4, welche nicht von dem Bindemittel 1 durchdrungen sind. In beiden Fällen entsteht eine dauerhafte belastbare Verbindung zwischen Partikel 5 und Bindemittel 1. Die Partikel (Sub-Partikel, Teilpartikel) 2 des PE/HDPE sind somit fest miteinander verbunden ("verschweißt").

Es hat sich auch gezeigt, dass die Porosität von PE (oder HDPE) mit einer wie oben beschriebenen weitgehend offenen, schwammartigen Struktur derart ausgebildet ist, dass die Poren zumindest teilweise mit Bindemittel gefüllt werden und/oder eine solche Geometrie und/oder eine Rauigkeit oder sonstige Kornform, die eine formschlüssige Verbindung zwischen Bindemittel und dem Korn ermöglicht aufweisen, dass es nach dem Aushärten des Verbundwerkstoffs auch beim Anschleifen des Materials nicht zu einer erhöhten Verschmutzung kommt. PE (oder auch HDPE) ist darüber hinaus weiter bevorzugt, da es großtechnisch hergestellt und in großen Mengen vergleichsweise günstig verfügbar ist.

Ein solcher Füllstoff kann zusätzlich oder alternativ zu anderen (mineralischen und/oder synthetischen) Füllstoffen eingesetzt werden. Wird PE-Pulver zusätzlich zu mineralischem Füllstoff bzw. mineralischen Füllstoffen gemeinsam als Bestandteil eine Verbundwerkstoffs eingesetzt, wird dieses beispielsweise in Anteilen von 0,05 - 40 Gew.-%, bevorzugt 0,075 - 20 Gew.-%, besonders bevorzugt 0,1 - 5 Gew.-% eingesetzt.

Es hat sich gezeigt, dass das PE/HDPE trotz der Offenporigkeit nicht zu einer Erhöhung des Bindemittelverbrauchs oder einer Verschlechterung der rheologischen Eigenschaften führt. Ein üblicher Verbundwerkstoff aus mineralischen Füllstoffen hat einen Füllgrad von ca. 70 Gew.-% (70 Gew.-% Füllstoff und 30 Gewichts% Bindemitte). Die Dichte eines derartigen Verbundwerkstoffs beträgt etwa 2 g/cm³ bzw. 2 kg/l (z.B. ca. 1,4 kg Füllstoff auf 0,6 kg Bindemittel). Die Schüttdichte des Füllstoffs liegt bei ca. 1.3 g/cm³. Eine PE enthaltende Füllstoffmischung im gleichen Ansatz kann ebenfalls mit einem Füllgrad von ca. 70 Gew-% in einem Verbundwerkstoff eingesetzt werden. Die Schüttdichte einer derartigen Mischung beträgt allerdings nur ca. 0,9 - 1 g/cm³. Dadurch ergibt sich eine deutlich reduzierte Dichte des ausgehärteten Verbundwerkstoffs von ca. 1,5 - 1,7 g/cm³ abhängig von der Schüttdichte des PE-Pulvers. Somit ergeben sich aus der gleichen Masse Füllstoff und Bindemittel wie beim konventionellen Verbundwerkstoff bei einem Gewicht von 2 kg ein Volumen von ca. 1,25 - 1,3l. Das bedeutet im Umkehrschluss, dass für 1 l Verbundwerkstoff bei konventionellen Verbundwerkstoffen 0,6 kg des vergleichsweise hochpreisigen Bindemittels eingesetzt werden, jedoch nur ca. 0,45 - 0,48 kg Bindemittel für 1 l eine neuartigen Verbundwerkstoffs, bei dem PE-Pulver als Füllstoff eingesetzt wird.

Die ebenfalls überraschend guten rheologischen Eigenschaften von Mischungen aus PE-Granulat und mineralischem Füllstoff sind anders als bei üblichen Beimengungen aus z.B. Glaskugeln oder Glashohlkugeln nicht durch die perfekte Kugelform des Korns zu erklären, sondern durch die Tatsache, dass PE einen geringen Elastizitätsmodul hat und somit verformbar ist. In flüssigen Massen kann sich also das PE verformen und somit Platz für andere (harte) Füllstoffe schaffen und somit deren Umlagerung erleichtern.

Werden ausschließlich PE-Pulver und Bindemittel eingesetzt sind je nach Schüttdichte Füllgrade von 15 - 35 Gew.-% möglich. Die Dichte derartiger Mischungen liegt bei ca. 1 g/cm³. Derartige Zusammensetzungen sind bevorzugt, da dabei die optischen Eigenschaften insbesondere von HDPE besonders gut ausgenutzt werden können. Dadurch, dass HDPE teilkristallin ist, weisen "kristalline" und "glasige" Bereiche unterschiedliche Brechungsindizes auf, wodurch es zwischen diesen Bereichen zu Streulicht kommt. Das Material ist daher transluzent. Dies ist vorteilhaft bei der Verwendung als Füllstoff in einem Bindemittel. Transparente Füllstoffe, wie z.B. Glasmehl gleicher KGV erscheinen beim Einmischen in das Bindemittel, das einen ähnlichen Brechungsindex von etwa 1,5 aufweist, braun, da es zu Streulichteffekten kommt. Dementsprechend sind derartige Füllstoffe für einige Anwendungen, bei denen eine hochweiße Farbe der Verbundwerkstoffe erwünscht ist (z.B. im Sanitärbereich), nicht geeignet. Demgegenüber können Verbundwerkstoffe mit PE- (oder HDPE-) Partikeln als Füllstoff sowohl für hochweiße Verbundwerkstoffe (Sanitär) als auch in der Masse eingefärbte Verbundwerkstoffe (z.B. Küchenspülen) eingesetzt werden.

Derartige Mischungen mit ausschließlich PE- (oder HDPE-) Partikeln als Füllstoff weisen eine geringe mechanische Widerstandfähigkeit auf. Der Abrieb beträgt ca. 40 - 50 mg/100 Zyklen (Taber Abrasor) und die Kratzfestigkeit << 1 N (Eirichsentest).

Erstaunlicherweise ist aber durch den Einsatz von PE/HDPE in Kombination mit mineralischen Füllstoffen ein Verbundmaterial möglich, dass trotz geringerer Dichte die gleiche Abriebfestigkeit aufweist wie ein rein aus mineralischen Füllstoffen bestehender Verbundwerkstoff. In Tabelle 4 sind beispielhafte Mischungen aus mineralischen Füllstoffen und unterschiedlichen PE-Granulaten gezeigt. In den angegebenen beispielhaften Mischungen wurden mineralische Füllstoffe mit einer Mohshärte von > 4 und einer Korngröße von 0 - 150 $\mu$m verwendet. Die Dichte der mineralischen Füllstoffe in den angegebenen Beispielen liegt bei ca. 2,5 g/cm$^3$. Variiert wurde bei den Beispielen sowohl die Art des PE als auch dessen Anteil in Gew.-%. Die Eigenschaften der verwendeten PE-Typen sind in Tabelle 3 aufgezeigt.

Tabelle 3: Beispiele verschiedener Füllstoffe

| PE Typ | Mittlerer Korndurchmesser d50 | Korn | Schüttdichte g/cm$^3$ |
|---|---|---|---|
| Typ 1 | 50 | Nicht Porös | Ca. 0,4 |
| Typ 2 | 20 | Porös | Ca. 0,2 |
| Typ 3 | 130 | Porös | Ca. 0,25-0,3 |

Tabelle 4: Vergleich von Dichte und Abrieb verschiedener Füllstoffmischungen

| | 5% Typ1 | 3% Typ1 | 2% Typ 1 | 2,4% Typ 2 | 2,4% Typ 3 | Kein PE |
|---|---|---|---|---|---|---|
| **Dichte** [g/cm$^3$] | 1,62 | 1,68 | 1,7 | 1,5 | 1,7 | 2 |
| **Abrieb** [mg/100Zyklen] (Taber) | 32,5 | 27,8 | 25,6 | 30 | 30,8 | 29,6 |
| **Normprüfung** DIN 14688 | ok | ok | ok | ok | ok | ok |

Die Beispiele in Tabelle 4 beziehen sich auf einen schleifbaren und verklebbaren weißen Sanitärmix (Sanitärverbundwerkstoff). Analog gelten die Beispiele jedoch auch für einen farbigen Spülenmix (Spülenverbundwerkstoff) mit Körnungen von 0,5 - 2 mm. Die Kratzhärte (Eirichsen-Test) liegt im Bereich > 0,1 N, bevorzugt 1 N - 4 N.

Wie anhand Tabelle 4 ersichtlich, ist es bei den beispielhaft gezeigten Verbundwerkstoffen der vorliegenden Erfindung möglich, durch den Zusatz von PE-Pulver zu einem mineralischen Füllstoff die Abriebfestigkeit auf dem gleichen Niveau zu halten wie bei einem rein mineralischen Füllstoff, die Dichte des Verbundwerkstoffs jedoch deutlich zu verringern.

Die Verwendung eines offenporigen Füllstoffs mit niedrigem E-Modul (wie dem hier exemplarisch aufgeführtem HD-PE) bringt zusätzlich auch deutliche Vorteile bei der mechanischen Beständigkeit des Verbundwerkstoffs bzw. des fertigen Bauteils.

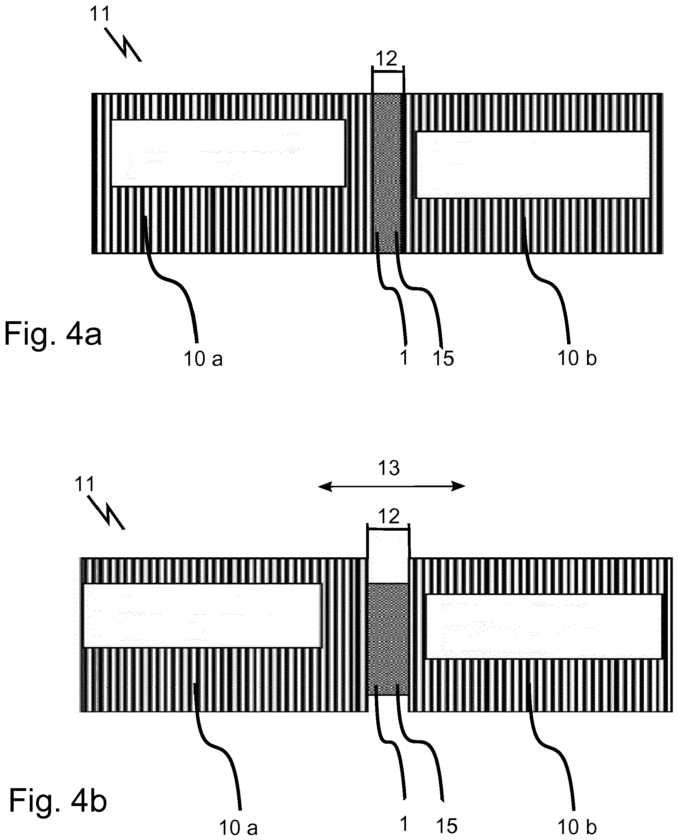

Die Figuren 4a und 4b zeigen das Verhalten eines aus dem Stand der Technik bekannten Verbundmaterials 11 mit mineralischen Füllstoffen 10 a und 10 b bei mechanischer Belastung 13. Bei diesen konventionellen Verbundwerkstoffen 11 mit mineralischen Füllstoffen 10 a, 10 b (wie sie derzeit beispielsweise im Sanitärbereich und für Küchenspülen eingesetzt werden) besteht nur ein geringer Abstand 12 zwischen den harten mineralischen Partikeln 10 a und 10 b. Die beiden mineralischen Füllstoffen 10 a, 10 b sind über eine Materialbrücke 15 verbunden. Die Materialbrücke 15 besteht aus ausgehärtetem Bindemittel 1, wobei die Menge an (hochpreisigem) Bindemittel 1 in diesem Fall gering ist. Bereits bei vergleichsweise geringen auf den Verbundwerkstoff 11 wirkenden Kräften 13 wird das Bindemittel 1 hohen Spannungen ausgesetzt, da aufgrund des hohen E-Moduls kleine Dehnungen hohe Spannungen erzeugen. Das Material bzw. der Verbundwerkstoff ist spröd elastisch.

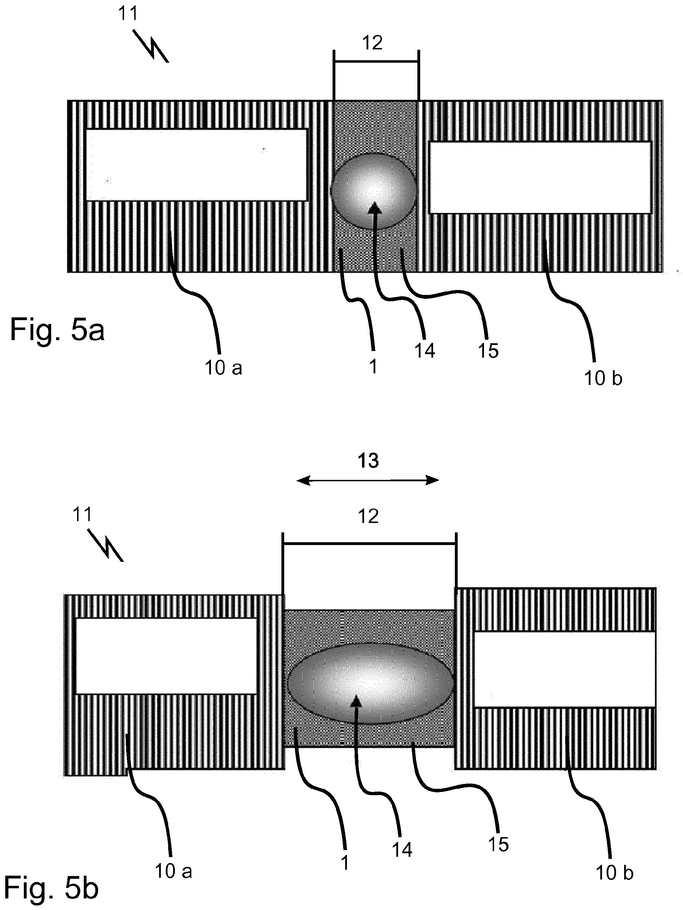

Demgegenüber zeigen die Figuren 5a und 5b das Verhalten eines Verbundmaterials 11 mit mineralischen Füllstoffen 10a und 10 b und zusätzlichen porösen und/oder eine Rauigkeit oder sonstige Kornform, die eine formschlüssige Verbindung zwischen Bindemittel und dem Korn ermöglicht aufweisenden Füllstoffen 14 bei mechanischer Belastung. Analog zu den Figuren 4a, b sind zwei durch einen Abstand 12 beabstandete mineralische Füllstoffe 10a und 10 b gezeigt, die über eine Materialbrücke 15 verbunden ist. Die Materialbrücke 15 wird durch das ausgehärtete Bindemittel 1 und den Füllstoff 14 gebildet. Da durch die bevorzugt ganze oder teilweise Durchdringung eines Füllstoffs 14 nach dem Aushärten eine formschlüssige Verbindung zwischen Bindemittel 1 und Füllstoff 14 besteht, ist diese auch mechanisch belastbar. Gleichzeitig steigt der Abstand 12 zwischen einzelnen harten (mineralischen) Füllstoffpartikeln 10a und 10 b durch den porösen Füllstoff 14. Die zwischen den harten Partikeln 10a und 10 b befindliche Materialbrücke 15 weist im Mittel einen niedrigeren E- Modul auf, da der offenporige Füllstoff 14 einen niedrigeren E- Modul als das Bindemittel 1 aufweist. Bei mechanischer Belastung 13 erfolgt durch die (formschlüssige) Bindung des porösen (und vergleichsweise weichen) Füllstoffs 14 mit dem Bindemittel 1 eine gemeinsame Verformung ohne Ablösungen des Bindemittels 1 vom Korn 14 (Risse). Bei derartigen Mischungen mit einem "weichen" porösen Füllstoff 14 sinkt im Mittel der E-Modul des Verbundmaterials 11.

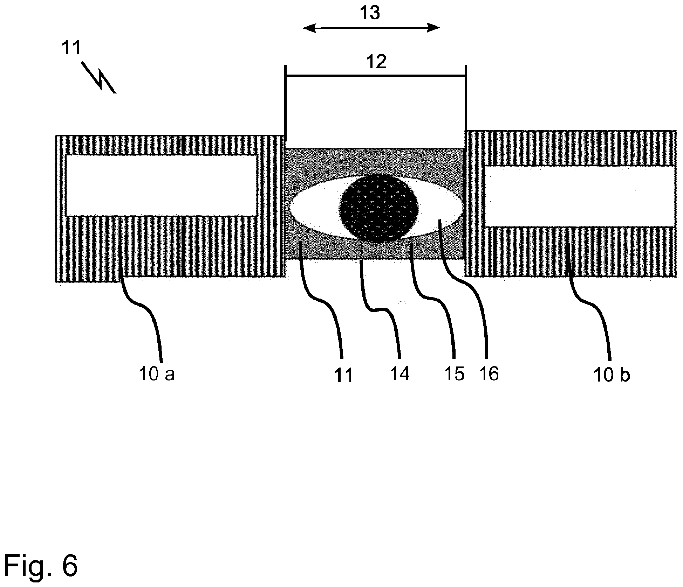

Fig. 6 zeigt im Gegensatz dazu schematisch ein mögliches Verhalten eines Verbundwerkstoffes 11, wenn weder eine chemische noch eine formschlüssige Bindung zwischen Füllstoff 14 und Bindemittel 1 vorliegt. Analog zu den Figuren 4a, b und 5a, b sind zwei durch einen Abstand 12 beabstandete mineralische Füllstoffe 10a und 10 b gezeigt, die über eine Materialbrücke 15 verbunden ist. Die Materialbrücke 15 wird durch das ausgehärtete Bindemittel 1 und den Füllstoff 14 gebildet, wobei weder eine chemische noch eine formschlüssige Bindung zwischen Füllstoff 14 und Bindemittel 1 vorliegt. In diesem Fall kann der (nicht mit dem Bindemittel 1 verbundene) Füllstoff 14 bei mechanischer Belastung 13 des Verbundwerkstoffes 11 nicht gemeinsam mit dem Bindemittel 1 verformt werden und dementsprechend auch keine Verformungsenergie aufnehmen bzw. speichern. Bei mechanischer Belastung 13 entsteht somit ein Freiraum 16 zwischen Füllstoff und Bindemittel in der Materialbrücke 15. Die auf den Verbundwerkstoff 11 wirkenden Kräfte 13 können nur zu einem geringeren Anteil als elastische Verformungsenergie im Verbundwerkstoff 11 gespeichert werden und stehen daher beispielsweise als zur Rissausbreitung notwendige Energie zur Verfügung.

Durch die verformbarere Verbindung zwischen den mineralischen Füllstoffpartikeln 10a, 10b, die der Einsatz eines weichen porösen und/oder eine Rauigkeit oder sonstige Kornform, die eine formschlüssige Verbindung zwischen Bindemittel und dem Korn ermöglicht, aufweisenden Füllstoffs 14 ermöglicht, sinkt insgesamt der E-Modul des Verbundwerkstoffs 11. Dies bedeutet, wie oben dargestellt, dass bei gleicher Dehnung oder (sonstiger z.B. mechanischer) Belastung weniger elastische Verformungsenergie in dem Verbundwerkstoff 11 bzw. einem Bauteil, hergestellt aus dem Verbundwerkstoff 11, gespeichert werden kann. Weniger elastisch gespeicherte Energie bedeutet, dass bei gleicher Verformung (bzw. mechanischer Belastung) weniger Energie zur Rissausbreitung verfügbar ist.

Die Möglichkeit, mehr Energie in Form von elastischer Verformung im Inneren des Verbundwerkstoffes speichern zu können, bedeutet, dass das Bauteil eine höhere Bruchzähigkeit aufweist. Diese vorteilhafte Eigenschaft lässt sich prinzipiell für alle Mischungen zur Herstellung von Verbundwerkstoffen (z.B. Sanitärmischungen, Schleifbare Sanitärmischungen, Spülenmischungen usw.) ausnutzen.

Analog wird durch derartige Mischungen bzw. bei aus diesen Mischungen hergestellten Verbundwerkstoffen auch das Abplatzverhalten bei Stoß mit einem spitzen Körper deutlich verbessert. Abplatzungen (Lateralrisse) entstehen bei der Entlastung des Materials nach dem Eindringen des Stoßkörpers. Verantwortlich dafür ist die elastisch gespeicherte Energie unter dem Einschlagpunkt (isostatisch komprimiertes Material). Es gilt: Je geringer der E- Modul der Materials, desto geringer die Lateralrissbildung und damit der Materialabtrag. Ein Beispiel, bei dem dieser Effekt ausgenutzt wird, sind Gummipanzerungen von Mühlen. Üblicherweise geht das geringere Abplatzverhalten jedoch mit geringerer Widerstandsfähigkeit gegen Verkratzen und Abrieb einher. Dies ist aber jedoch bei hier vorgeschlagenen Füllstoffen und den daraus hergestellten Verbundwerkstoffen nicht der Fall. Bei den vorgeschlagenen Verbundwerkstoffen liegt die Schlagzähigkeit trotz der hohen Widerstandsfähigkeit gegen Verkratzen und Abrieb bei > 1 kJ/m$^2$, bevorzugt > 2 kJ/m$^2$.

Von besonderem Interesse bei den bereits angesprochenen Anwendungsmöglichkeiten der beschriebenen Verbundwerkstoffe ist die Bruchwahrscheinlichkeit eines Bauteils. Entscheidend für die Bewertung der Bruchwahrscheinlichkeit ist der längste Riss unter Zugspannung. Ein Maß für die Wahrscheinlichkeit des Versagens eines sprödelastischen Werksstoffs (z.B. Keramik) unter einer bestimmten Last ist der Weibullmodulus. Je höher dieser Weibullmodulus ist, desto geringer ist die Wahrscheinlichkeit, dass ein sprödelastisches Bauteil unter der vorhergesehenen Belastung bricht. Unter Verwendung der hier beschriebenen Verbundwerkstoffe kann ein Bauteil daher bei vorgegebener Belastungsgrenze dünnere Wandstärken aufweisen und benötigt weniger Materialreserven. In Tabelle 5 sind beispielhaft einige Werte des Weibullmodulus für verschiedene Werkstoffe (Keramik) genannt.

Tabelle 5: beispielhafte Werte des Weibullmodulus

| Effektives Volumen | Zulässige Biegespannung [MPa] | | | |
|---|---|---|---|---|
| V$_{Bauteil}$/V$_{Probe}$ | Keramik 1 | Keramik 2 | Keramik 3 | Keramik 4 |
| 1 : 1 | 400 (m = 10) | 300 (m = 10) | 250 (m = 20) | 200 (m = 30) |

(fortgesetzt)

| Effektives Volumen | Zulässige Biegespannung [MPa] | | | |
|---|---|---|---|---|
| V<sub>Bauteil</sub>/V<sub>Probe</sub> | Keramik 1 | Keramik 2 | Keramik 3 | Keramik 4 |
| 20 : 1 | 252 (63 %) | 237 (79 %) | 210 (84 %) | 186 (94 %) |
| 100 : 1 | 160 (40 %) | 189 (63 %) | 197 (79 %) | 172 (86 %) |
| Werkstoff | Neuer Hochleistungswerkstoff | Aluminiumoxid Silizium infiltriertes Siliziumcarbid | - | - |
| Anmerkung | Prozess nicht ausgereift | **Stand der Technik** | Aktuelle Spitzentechnik | Wunsch des Konstrukteurs |

Überraschend hat sich gezeigt, dass ein beispielhafter Verbundwerkstoff aus mineralischen Füllstoffen und einem Polyesterharz bei einem Füllgrad von 73 Gew.-% einen Weibullmodulus (m) von 11 - 20 aufweist. In Tabelle 6 wird die Ermittlung des Weibullmodulus (m) eines beispielhaften Verbundwerkstoffs gezeigt. Ein derartiger beispielhafter Verbundwerkstoff kann somit einen Weibullmodulus von 14 aufweisen. Dieser Wert liegt deutlich über dem einer Ingenieurkeramik (wie in Tabelle 5 gezeigt). Dies verdeutlicht, dass durch einen solchen Verbundwerkstoff insbesondere gegenüber von Sanitärkeramik deutlich geringere Wandstärken und geringeres Gewicht bei gleicher Festigkeit ermöglicht werden.

Tabelle 6; Ermittlung des Weibullmodulus (m) eines beispielhafter Verbundwerkstoffe

| Anzahl Tests | jeweils 30 |
|---|---|
| Annahmewahrscheinlichkeit [%] | > 90 |
| Biegespannung σ [MPa] | 60 - 100 |
| m (korrigiert) | 11 - 20 |

Ein weiterer vorteilhafter Aspekt, der sich aus der geringeren Dichte eines beispielhaften Verbundwerkstoffs mit PE-Füllstoff ergibt, ist die Reduzierung der Belastungen des Bauteils die zum Bruch führen. Lasten führen zu Durchbiegungen und damit auf der konvexen Oberfläche zu Zugspannungen, die Risse auslösen. Interessant dabei ist, dass die Geometrie des Bauteils einen wesentlich größeren Einfluss auf die Durchbiegung und damit die Spannung hat als das Material.

Die Biegesteifigkeit eines Bauteils gibt an, wie groß das Biegemoment im Verhältnis zur Krümmung des Bauteils ist. Für homogene Querschnitte ist die Biegesteifigkeit durch das Produkt $E \cdot I$ aus dem Elastizitätsmodul $E$ des Materials und dem geometrischen Flächenträgheitsmoment $I$ des gegebenen Querschnitts gegeben. Letzteres berechnet sich als:

$$I = \int dy dz \, y^2$$

Für ein Rechteck mit den Seitenkanten $h$ und $b$ (in z- respektive y-Richtung) und mit einer Fläche $A = b \cdot h$ ergibt sich ein axiales Flächenmoment 2. Grades um die y- bzw. z Achse:

$$I_y = \frac{b \cdot h^3}{12} = A \cdot \frac{h^2}{12}$$

$$I_z = \frac{h \cdot b^3}{12} = A \cdot \frac{b^2}{12}$$

Das Quadrat kann als Spezialfall des Rechtecks mit $b = h$ berechnet werden.

Für einen Balken mit rechteckigem Querschnitt $h \cdot b$ (in z- respektive y-Richtung) ergibt sich somit eine Biegesteifigkeit:

$$E \cdot \frac{h^3 b}{12}$$

Daraus wird deutlich, dass bei einem rechteckigen Bauteil (z.B. Querschnitt durch eine Platte) die Biegesteifigkeit mit der 3. Potenz der Dicke $h$ steigt aber nur linear mit dem E- Modul $E$. Demzufolge ist bei höherer Biegesteifigkeit die Durchbiegung unter einer Last und auch die Zugspannung geringer. Durch Verwendung des erfindungsgemäßen Verbundwerkstoffs, der eine geringere Dichte aufweist, kann man bei gleicher Masse und vorgegebenen Dimensionierungen für Länge und Breite die Dicke erhöhen und damit die Lasten und die Bruchwahrscheinlichkeit deutlich reduzieren: Beispiel: Küchenspüle Ablaufbereich: 8 mm Materialstärke h, Breite 40 cm, Länge 50 cm, Dichte des Materials etwa 2 g/cm$^3$: 1,6 l oder 3,2 kg.

Ein beispielhafter Verbundwerkstoff mit PE-Füllmaterial hat eine Dichte von 1,6 g/cm$^3$. Bei gleicher Länge, Breite und Masse könnte bei einem Bauteil die Dicke auf ca. 9,4 mm erhöht werden. Da gemäß der Formel $E \cdot h^3 b$/12 die Höhe $h$ des Bauteils mit der 3. Potenz einfließt, könnte durch die zusätzlichen 1,4 mm (9,4 mm statt 8 mm) Materialstärke das Flächenmoment $I$ um 60 % steigen oder die Spannungen um 60 % sinken. Selbst bei einem beispielsweise um 10 % niedrigerem E- Modul des leichten Materials würden die Spannungen (da der E-Modul nur in 1. Potenz einfließt) um 50 % geringer.

Demzufolge kann ein beispielhafter Verbundwerkstoff nach zwei Möglichkeiten genutzt werden:

1. um bei gleicher Masse eine deutlich geringere Bruchgefahr zu realisieren oder

2. bei vorgegebener Bruchgefahr ein Bauteil mit geringerer Masse zu ermöglichen.

Insbesondere bei Badewannen und Duschtassen für die das schleifbare Verbundmaterial mit PE genutzt werden könnte, kann die Reduzierung der Masse von großem Vorteil sein. Bei Küchenspülen dagegen, die beim Transport der Gefahr des Bruchs ausgesetzt sind und daher bisher besonders aufwendig verpackt werden müssen, könnte eine höhere Wandstärke bei gleicher Masse sinnvoll sein.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

| | |
|---|---|
| 1 | Bindemittel |
| 2 | Offenporige Partikel |
| 3 | Durchdringung Bindemittel/ Partikel |
| 4 | Nicht von Bindemittel durchdrungener Bereich |
| 10a | Erster mineralischer Füllstoff |
| 10b | Zweiter mineralischer Füllstoff |
| 11 | Verbundwerkstoff |
| 12 | Abstand |
| 13 | Kraft |
| 14 | Füllstoff |
| 15 | Materialbrücke |
| 16 | Freiraum |

**Patentansprüche**

1. Verbundwerkstoff, umfassend mindestens ein Bindemittel und mindestens eine Füllstofffraktion, wobei der Verbundwerkstoff eine Dichte von unter 2 g/cm$^3$ aufweist, wobei das mindestens eine Bindemittel ausgewählt ist aus einer Gruppe, die Acrylate und Polyester umfasst, wobei der Verbundwerkstoff zumindest zwei Füllstofffraktionen umfasst, wobei mindestens eine erste Füllstofffraktion partikuläre polymere Füllstoffe aufweist, wobei der Füllstoff der ersten Füllstofffraktion Polyethylen, insbesondere HD Polyethylen, ist und eine zweite Füllstofffraktion mineralische Füllstoffe aufweist, wobei der Verbundwerkstoff 0,05 - 40 Gew.-% Füllstoffe der ersten Füllstofffraktion umfasst, wobei die erste Füllstofffraktion mit partikulären polymeren Füllstoffen eine spezifische Dichte von < 2 g/cm$^3$ und somit eine geringere spezifische Dichte als die Füllstoffe der zweiten Füllstofffraktion aufweist, **dadurch gekennzeichnet, dass** Füllstoffe der ersten Füllstofffraktion eine offene und/oder schwammartige und/oder poröse Struktur und/oder eine Rauigkeit aufweisen, die eine formschlüssige Verbindung zwischen Bindemittel und dem Korn ermöglicht, wobei eine dauerhafte Bindung zwischen den Partikeln der ersten Füllstofffraktion und dem Bindemittel beruhend auf Formschluss ausgebildet ist und die erste Füllstofffraktion ganz oder teilweise von dem Bindemittel durchdrungen ist, wobei der Elastizitätsmodul der ersten Füllstofffraktion geringer als der Elastizitätsmodul des Bindemittels ist und wobei die Füllstoffe der ersten Füllstofffraktion eine mittlere Korngröße in einem Bereich von 1 - 300 $\mu$m aufweisen.

2. Verbundwerkstoff nach Anspruch 1,
   **dadurch gekennzeichnet, dass**
   die erste Füllstofffraktion mit partikulären polymeren Füllstoffen eine spezifische Dichte von < 1,5 g/cm$^3$, besonders bevorzugt < 1 g/cm$^3$ aufweist.

3. Verbundwerkstoff nach einem der Ansprüche 1 bis 2,
   **dadurch gekennzeichnet, dass**
   der Verbundwerkstoff 0,075 - 20 Gew.-%, besonders bevorzugt 0,1 - 5 Gew.-% Füllstoffe der ersten Füllstofffraktion umfasst.

4. Verbundwerkstoff nach einem der Ansprüche 1 bis 3,
   **dadurch gekennzeichnet, dass**
   der Elastizitätsmodul der ersten Füllstofffraktion geringer als der Elastizitätsmodul der zweiten Füllstofffraktion ist, wobei der Elastizitätsmodul der ersten Füllstofffraktion bevorzugt < 1,5 GPa, besonders bevorzugt < 1 GPa ist.

5. Verbundwerkstoff nach einem der Ansprüche 1 bis 4,
   **dadurch gekennzeichnet, dass**
   die Füllstoffe der ersten Füllstofffraktion eine Schüttdichte von 0,2 - 1 g/cm$^3$, bevorzugt 0,2 bis 0,3 g/cm$^3$ aufweisen.

6. Verbundwerkstoff nach einem der Ansprüche 1 bis 5,
   **dadurch gekennzeichnet, dass**
   durch die formschlüssige Verbindung zwischen den Partikeln der ersten Füllstofffraktion und dem Bindemittel eine verformbare Verbindung zwischen Partikeln der zweiten Füllstofffraktion gebildet ist, wodurch der Elastizitätsmodul des Verbundwerkstoffs verringert ist.

7. Verbundwerkstoff nach einem der Ansprüche 1 bis 6,
   **dadurch gekennzeichnet, dass**
   der Füllstoff der ersten Füllstofffraktion transluzent und demnach farbneutral im Bindemittel ist und/oder chemisch inert ist, bevorzugt zumindest gegenüber den während der Herstellung, der Verarbeitung und/oder der Anwendung mit diesen in Kontakt kommenden Chemikalien chemisch inert ist.

8. Verbundwerkstoff nach einem der Ansprüche 1 bis 7,
   **dadurch gekennzeichnet, dass**
   der Füllstoff der ersten Füllstofffraktion chemisch inert ist, bevorzugt zumindest gegenüber den während der Herstellung, der Verarbeitung und/oder der Anwendung mit diesen in Kontakt kommenden Chemikalien chemisch inert ist.

9. Verbundwerkstoff nach einem der Ansprüche 1 bis 8,
   **dadurch gekennzeichnet, dass**
   die erste Füllstofffraktion zusätzlich ein Elastomer, PVC, Silikon, Polypropylen oder Teflon umfasst.

10. Verbundwerkstoff nach einem der Ansprüche 1 bis 9,
    **dadurch gekennzeichnet, dass**
    der Verbundwerkstoff eine Abriebbeständigkeit nach dem Taber Abrasortest < 50 mg/ 100 Zyklen, bevorzugt < 40 mg/ 100 Zyklen, besonders bevorzugt < 35 mg/ 100 Zyklen und/oder eine Kratzhärte (Eirichsen) in einem Bereich > 0,1 N, bevorzugt 1N - 4N und/oder eine Schlagzähigkeit von > 1 KJ/m$^2$, bevorzugt >2 KJ/m$^2$aufweist.

**11.** Bauteil umfassend einen Verbundwerkstoff nach einem der Ansprüche 1 - 10.

**12.** Bauteil nach Anspruch 11,
**dadurch gekennzeichnet, dass**
das Bauteil einen Weibullmodulus (m) von 11 - 20 (bei einem Füllgrad von 73 Gew.-%), bevorzugt von 14 aufweist.

**Claims**

**1.** Composite material, comprising at least one binder and at least one filler fraction, the composite material having a density of less than 2 g/cm$^3$, the at least one binder being selected from a group comprising acrylate and polyester, the composite material comprising at least two filler fractions, at least a first filler fraction comprising polymer fillers in particulate form, the filler of the first filler fraction being polyethylene, in particular HD polyethylene, and a second filler fraction comprising mineral fillers, the composite material comprising 0.05-40 wt.% fillers of the first filler fraction, the first filler fraction comprising polymer fillers in particulate form having a specific density of < 2 g/cm$^3$ and thus a lower specific density than the fillers of the second filler fraction,
**characterised in that**
fillers of the first filler fraction have an open and/or sponge-like and/or porous structure and/or a roughness that allows an interlocking connection between the binder and the particle, a permanent bond involving interlocking being formed between the particles of the first filler fraction and the binder, and the first filler fraction being penetrated, completely or in part, by the binder, the modulus of elasticity of the first filler fraction being lower than the modulus of elasticity of the binder, and the fillers of the first filler fraction having an average particle size in a range of from 1-300 $\mu$m.

**2.** Composite material according to claim 1,
**characterised in that**
the first filler fraction comprising polymer fillers in particulate form has a specific density of < 1.5 g/cm$^3$, particularly preferably < 1 g/cm$^3$.

**3.** Composite material according to any of claims 1 to 2,
**characterised in that**
the composite material comprises 0.075-20 wt.%, particularly preferably 0.1-5 wt.% fillers of the first filler fraction.

**4.** Composite material according to any of claims 1 to 3,
**characterised in that**
the modulus of elasticity of the first filler fraction is lower than the modulus of elasticity of the second filler fraction, the modulus of elasticity of the first filler fraction preferably being < 1.5 GPa, particularly preferably < 1 GPa.

**5.** Composite material according to any of claims 1 to 4,
**characterised in that**
the fillers of the first filler fraction have a bulk density of 0.2-1 g/cm$^3$, preferably 0.2 to 0.3 g/cm$^3$.

**6.** Composite material according to any of claims 1 to 5,
**characterised in that**
the interlocking connection between the particles of the first filler fraction and the binder forms a deformable connection between particles of the second filler fraction, as a result of which the modulus of elasticity of the composite material is reduced.

**7.** Composite material according to any of claims 1 to 6,
**characterised in that**
the filler of the first filler fraction is translucent and thus colour-neutral in the binder and/or is chemically inert, preferably is chemically inert at least with respect to the chemicals with which it comes into contact during manufacturing, processing and/or use.

**8.** Composite material according to any of claims 1 to 7,
**characterised in that**
the filler of the first filler fraction is chemically inert, preferably is chemically inert at least with respect to the chemicals with which it comes into contact during manufacturing, processing and/or use.

9.  Composite material according to any of claims 1 to 8,
    **characterised in that**
    the first filler fraction additionally comprises an elastomer, PVC, silicone, polypropylene or Teflon.

10. Composite material according to any of claims 1 to 9,
    **characterised in that**
    the composite material has an abrasion resistance, according to the Taber abrader test, of < 50 mg/100 cycles, preferably < 40 mg/100 cycles, particularly preferably < 35 mg/100 cycles, and/or a scratch hardness (Eirichsen) in a range of > 0.1 N, preferably 1 N - 4 N, and/or an impact resistance of > 1 KJ/m$^2$, preferably > 2 KJ/m$^2$.

11. Component comprising a composite material according to any of claims 1-10.

12. Component according to claim 11,
    **characterised in that**
    the component has a Weibull modulus (m) of from 11-20 (with a degree of filling of 73 wt.%), preferably of 14.


**Revendications**

1.  Matière première composite, comportant au moins un liant et au moins une fraction de charge, la matière première composite présentant une densité de moins de 2 g/cm$^3$, ledit au moins un liant étant choisi dans un groupe qui comporte les acrylates et les polyesters, la matière première composite comportant au moins deux fractions de charge, au moins une première fraction de charge présentant des charges polymères particulaires, la charge de la première fraction de charge étant le polyéthylène, en particulier le polyéthylène HD, et une deuxième fraction de charge présentant des charges minérales, la matière première composite comportant 0,05-40 % en poids de charges de la première fraction de charge, la première fraction de charge ayant des charges polymères particulaires présentant une densité spécifique de < 2 g/cm$^3$ et par conséquent une densité spécifique plus faible que les charges de la deuxième fraction de charge,
    **caractérisé par le fait que**
    des charges de la première fraction de charge présentent une structure ouverte et/ou spongieuse et/ou poreuse et/ou une rugosité qui permet une liaison par complémentarité de formes entre le liant et le grain, une liaison durable entre les particules de la première fraction de charge et le liant étant réalisée sur la base de la complémentarité de formes, et la première fraction de charge étant imprégnée entièrement ou partiellement par le liant, le module d'élasticité de la première fraction de charge étant inférieur au module d'élasticité du liant, et les charges de la première fraction de charge présentant une grosseur moyenne de grain dans une plage de 1-300 μm.

2.  Matière première composite selon la revendication 1,
    **caractérisé par le fait que**
    la première fraction de charge ayant des charges polymères particulaires présente une densité spécifique de < 1,5 g/cm$^3$, de façon particulièrement préférée < 1 g/cm$^3$.

3.  Matière première composite selon l'une des revendications 1 à 2,
    **caractérisé par le fait que**
    la matière première composite comporte 0,075-20 % en poids, de façon particulièrement préférée 0,1-5 % en poids de charges de la première fraction de charge.

4.  Matière première composite selon l'une des revendications 1 à 3,
    **caractérisé par le fait que**
    le module d'élasticité de la première fraction de charge est inférieur au module d'élasticité de la deuxième fraction de charge, le module d'élasticité de la première fraction de charge étant de préférence < 1,5 GPa, de façon particulièrement préférée < 1 GPa.

5.  Matière première composite selon l'une des revendications 1 à 4,
    **caractérisé par le fait que**
    les charges de la première fraction de charge présentent une densité apparente de 0,2-1 g/cm$^3$, de préférence de 0,2 à 0,3 g/cm$^3$.

6.  Matière première composite selon l'une des revendications 1 à 5,

**caractérisé par le fait que**

par la liaison par complémentarité de formes entre les particules de la première fraction de charge et le liant, une liaison déformable est formée entre les particules de la deuxième fraction de charge, ce par quoi le module d'élasticité de la matière première composite est diminué.

7. Matière première composite selon l'une des revendications 1 à 6,
**caractérisé par le fait que**
la charge de la première fraction de charge est translucide et par conséquent présente une couleur neutre dans le liant et/ou est chimiquement inerte, de préférence est chimiquement inerte au moins vis-à-vis des produits chimiques venant en contact avec elle pendant la fabrication, le traitement et/ou l'utilisation.

8. Matière première composite selon l'une des revendications 1 à 7,
**caractérisé par le fait que**
la charge de la première fraction de charge est chimiquement inerte, de préférence est chimiquement inerte au moins vis-à-vis des produits chimiques venant en contact avec elle pendant la fabrication, le traitement et/ou l'utilisation.

9. Matière première composite selon l'une des revendications 1 à 8,
**caractérisé par le fait que**
la première fraction de charge comporte en outre un élastomère, du PVC, un silicone, du polypropylène ou du Téflon.

10. Matière première composite selon l'une des revendications 1 à 9,
**caractérisé par le fait que**
la matière première composite présente une résistance à l'abrasion selon le test d'abrasion Taber < 50 mg/100 cycles, de préférence < 40 mg/100 cycles, de façon particulièrement préférée < 35 mg/100 cycles et/ou une dureté à la rayure (Erichsen) dans une plage > 0,1 N, de préférence de 1 N - 4 N et/ou une résistance au choc > 1 KJ/m$^2$, de préférence > 2 KJ/m$^2$.

11. Pièce comportant une matière première composite selon l'une des revendications 1-10.

12. Pièce selon la revendication 11,
**caractérisée par le fait que**
la pièce présente un module de Weibull (m) de 11-20 (pour un degré de remplissage de 73 % en poids), de préférence de 14.

Fig. 1

Fig. 2

Fig. 3

Fig. 4a

Fig. 4b

Fig. 5a

Fig. 5b

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012113000
- DE 19812123 A1
- DE 102009025225 A1
- US 2006217464 A1
- JP 2001204066 A
- DE 1669648 A1
- EP 2366725 A1